# EUROPÄISCHE PATENTANMELDUNG

(11) **EP 2 030 891 A2**
(43) Veröffentlichungstag der Anmeldung: **04.03.2009**
(21) Anmeldenummer: 08010159.5
(22) Anmeldetag: 04.06.2008
(51) Int. Cl.: B64C 1/06

(54) **Flugzeug mit Rumpfschale und Fußbodenstruktur**

(30) Priorität: 19.06.2007 DE 102007028098
(71) Anmelder: EADS Deutschland GmbH, 85521 Ottobrunn (DE)
(72) Erfinder: Bräutigam, Stefan, 86159 Augsburg (DE); Lang, Gerhard, 87700 Memmingen (DE); Meyer, Ralf, 82825 München (DE); Seitz, Peter, 86807 Buchloe (DE)

(57) **Zusammenfassung**

Die Erfindung betrifft ein Flugzeug mit Rumpfschale (10) und Fußbodenstruktur (1) aus Querträgern (2) und Fußbodenplatten, wobei zur Verbindung von Rumpfschale (10) und Fußbodenstruktur (1) ausschließlich Stangen (4a,4b) vorhanden sind,

## Beschreibung

Die Erfindung betrifft ein Flugzeug nach dem Oberbegriff des Anspruch 1.

Bei der heutigen Montage und Integration eines Fußbodens in ein Passagierflugzeug werden die Querträger des Fußbodengerüstes fest mit der Rumpfschalenstruktur verbunden, in dem die Fußbodenquerträger mit den Rumpfspanten vernietet werden. Dies führt zu einem hohen Montageaufwand, der außerdem noch sehr zeitintensiv ist.

Die Fertigung von Rumpfschale und Fußbodenstruktur erfolgt separat, Bei der Fertigung der Rumpfschale werden die Spante mit einer gewissen Toleranz eingebaut. Die Fußbodenstruktur wird auf einem Montagegerüst zusammengebaut, wobei ebenfalls gewisse Toleranzen vorgesehen sind

Bei der Integration des Fußbodens in dem Rumpf müssen die Toleranzen zwischen den Fußbodenquerträgern und den Rumpfspanten durch aufwändiges Schimmen ausgeglichen werden, bevor mit dem Bohren und Montieren begonnen werden kann. Als Schimmen bezeichnet der Fachmann das Auftragen von aushärtbarer Paste direkt auf die zu verbindenden Bauteile - damit können Differenzen von bis zu ca. 0,7 mm ausgeglichen werden.

Durch den Einsatz von Faserverbundwerkstoffe, die immer öfter im Flugzeugbau eingesetzt werden, entsteht bei der Montage feiner Kohlenstaub, der sich nur schwer wieder aus dem Flugzeug entfernen lässt. Dadurch besteht Korrosionsgefahr für Aluminiumbauteile und die Gefahr eines Kurzschlusses in elektrischen Leitungen.

Außerdem sind wegen der Kohlenstaubemission aufwändige Gesundheitsmaßnahmen zu treffen.

Durch die fest verbundene Struktur aus Passagierfußboden und Flugzeugrumpf ist die Erstinstallation von Ausrüstungsgegenständen (Kabel, Leitungen etc.) sehr arbeitsaufwändig und kostenintensiv. Dies trifft auch für die spätere Wartung, bei notwendigen Reparaturen und besonders für Umrüstungen zu.

In der DE 3141 869 A1 ist ein Flugzeug beschrieben, bei dem Kräfte in Flugzeuglängsrichtung zwischen Rumpf und Fußbodenstruktur mittels horizontaler Stangen übertragen werden, Die Stangen sind rumpfseitig mit einem Rumpfspant und auf Seiten der Fußbodenstruktur mit den Fußbodenplatten verbunden. Zur Übertragung der Kräfte in Flugzeugquerrichtung sind an dem Rumpfspanten Beschläge vorhanden, die direkt mit dem Fußboden verbunden sind. Nach unten werden die Fußbodenplatten durch ein flächenhaftes, vertikal ausgerichtetes Bauteil abgestützt.

Der vorliegenden Erfindung liegt die Aufgabe zugrunde, ein Flugzeug mit Fußbodenstruktur zu schaffen, zu dessen Integration ein verminderter Montageaufwand benötigt wird, wobei auch die Montagezeiten vermindert werden können.

Diese Aufgabe wird mit dem Gegenstand des Patentanspruch 1 gelöst. Vorteilhafte Ausführungen der Erfindung sind Gegenstand weiterer Ansprüche.

Erfindungsgemäß wird die Verbindung von Rumpfschale und Fußbodenstruktur ausschließlich mittels Stangen realisiert.

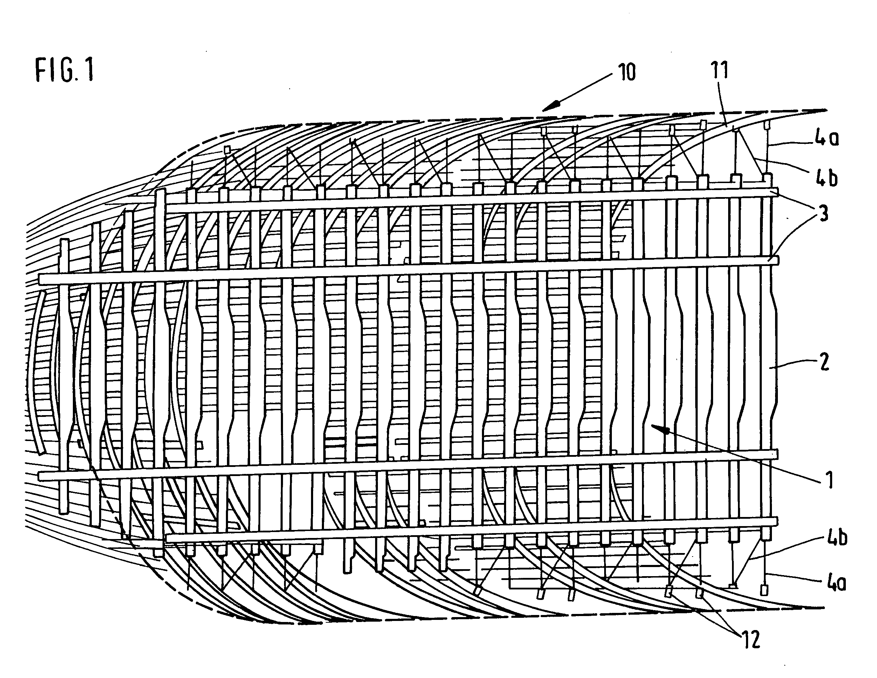

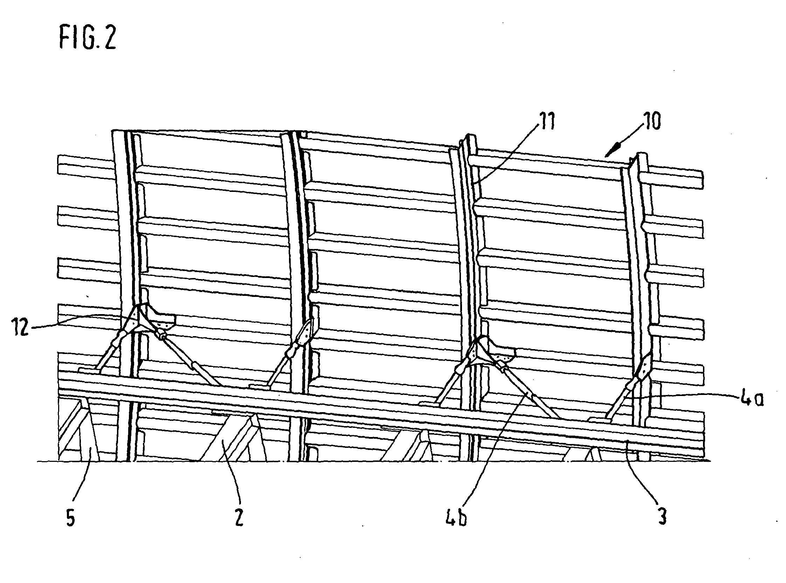

In einer bevorzugten Ausführungsform werden zwei Gruppen von Stangen verwendet:
Die erste Gruppe von Stangen ist in der Ebene der Fußbodenstruktur angeordnet. Sie bilden zusammen ein Fachwerk. Diese Stangen werden bevorzugt längenveränderlich ausgebildet.
Die zweite Gruppe von Stangen ist unterhalb der Fußbodenstruktur zur Abstützung nach unten angeordnet. Sie sind bevorzugt im rechten Winkel zur Fußbodenstruktur, d.h. vertikal, ausgerichtet und können sowohl mit fester Länge als auch längenveränderlich ausgebildet sein.
Durch die erfindungsgemäße Integration des Passagierfußbodens ausschließlich mittels Stangen kann das aufwändige Schimmen der Querträger des Fußbodens mit den Spanten der Rumpfschale entfallen. Die auftretenden Toleranzen werden durch die einstellbaren, längenveränderlichen Stangen ausgeglichen. Auch das Bohren von Kohlenfaserverbundwerkstoffe während der Fußbodenintegration kann entfallen, so dass die gesundheitsgefährdende Belastung durch Bohren im Kohlenverbundwerkstoff verringert wird.
Die Stangen, insbesondere die längenveränderlichen Stangen, werden vorteilhaft wiederlösbar ausgebildet. Sie werden z.B. mit Bolzen in den vorbereiteten Aufnahmebohrungen im Fußbodenquerträger und im Rumpfbeschlag eingesetzt. Durch die Mögüchkeit, größere Bereiche der Stangenanbindung des Fußbodens von der Rumpfstruktur zu lösen, können größere vormontierte Ausrüstungsgegenstände in den Bereich der seitlichen Anbindung des Fußbodens zum Rumpf integriert werden. Dies ergibt eine erhebliche Kosten- und Zeitersparnis, und zwar sowohl während der Erstmontage als auch bei Wartungsarbeiten und Upgrades.
Mit der Erfindung ist es möglich, sämtliche Kräfte in Flugzeuglängsrichtung und in Flugzeugquerrichtung ausschließlich durch die längenveränderlichen Stangen zu übertragen.
Insgesamt wird durch die erfindungsgemäße Anbindung des Passagierfußbodens mit dem Flugzeugrumpf eine saubere, schnellere Montage erreicht. Bei der Montage entsteht kein Kohlenstaub durch das Bohren. Die Verbindungen werden vorteilhaft nur gesteckt/geschraubt und durch die längenveränderlichen Stangen kann eine verspannungsarme Anbindung des Fußbodens mit dem Flugzeugrumpf hergestellt werden.
Die Erfindung wird mittels eines konkreten Ausführungsbeispiels unter Bezugnahme auf die Fig. 1 und 2 näher erläutert. Sie zeigen jeweils in 3-D-Darstellung eine Ausführung der erfindungsgemäßen Anbindung eines Passagierfußbodens 1 an einen Flugzeugrumpf 2 (Fig. 1 in Draufsicht; Fig. 2 in Seitenansicht).
Man erkennt das Fußbodengerüst 1 aus Querträgern 2 (z.B. aus CFK) und Sitzschienen 3, wobei letztere in Flugzeuglängsrichtung verlaufen. Die Fußbodenplatten, die auf den Querträgern angeordnet werden, sind hier aus Gründen der Übersichtlichkeit nicht dargestellt. Die seitliche Anbindung des Fußbodens 1 an die Rumpfschale 2 erfolgt auf beiden Längsseiten durch längenveränderliche, einstellbare Stangen 4a,4b.
Die Stangen 4a,4b an beiden Längsseiten bilden jeweils ein Fachwerk, wobei sich die Stangen in der (horizontalen) Ebene der Fußbodenstruktur 1 erstrecken.
Die in der Ebene der Fußbodenstruktur sich erstreckenden Stangen 4a,4b sind entweder in Flugzeugquerrichtung (Stangen 4a) oder unter einem spitzten Winkel zur Flugzeugquerrichtung (Stangen 4b) ausgerichtet.
Die in Flugzeugquerrichtung verlaufenden Stangen 4a sind einerseits mit einem Querträger 2 und andererseits mit einem Rumpfspant 11 verbunden. Die Anbindung an den Rumpfspant erfolgt über einen rumpfseitigen Beschlag 12. Wie man aus der Zeichnung erkennt, sind derartige, in Querrichtung verlaufende Stangen 4a an jedem Rumpfspant 11 vorhanden und zwar auf beiden Längsseiten des Fußbodengerüsts 1,
Die unter einem spitzen Winkel (insbesondere im Winkelbereich zwischen 30 und 60 Grad) zur Flugzeugquerrichtung verlaufenden Stangen 4b können vor allem auch Kräfte in die Flugzeuglängsrichtung übertragen. Auch diese Stangen 4b sind jeweils mit einem Querträger 2 der Fußbodenstruktur 1 und einem Rumpfspant 11 verbunden. Dabei ist in der gezeigten Ausführung eine Stange 4b nur an jedem zweiten Rumpfspant 11 und entsprechend nur an jedem zweiten Querträger 2 vorhanden.
Die Stangen 4a,4b werden vorteilhaft wiederlösbar ausgebildet, z.B. mit einem Bolzen mit zugehöriger Sicherungsmutter. Dies hat besondere Vorteile bei der Ausrüstungsintegration innerhalb des Flugzeugrumpfs, da durch das schnelle Lösen der Stangen eine gute Zugänglichkeit für den betreffenden Raumbereich geschaffen werden kann.
In Fig. 2 bezeichnet Bezugsziffer 5 eine zweite Gruppe von Stangen, welche unterhalb der Bodenstruktur und senkrecht zu dieser angeordnet sind.
   Auch die Stangen 5 der zweiten Gruppe sind einerseits mit einem Querträger 2 der Fußbodenstruktur und andererseits mit einem Rumpfspant 11 verbunden. Sie können längenveränderlich oder mit fester Länge ausgebildet werden. Wie die Stangen der ersten Gruppe können sie wiederlösbar ausgebildet sein, z.B. mit einem Bolzen mit zugehöriger Sicherungsmutter. In diesen Stangen kann vorteilhaft jeweils ein so genanntes Crash-Element (ausgebildet z.B. als Schälring) zur Aufnahme und Dissipation von Energie eingearbeitet sein.
Die Montage des Fußbodens erfolgt wie folgt:
   Der rumpfseitige Beschlag wird schon bei der Rumpfschalenmontage integriert. Das Fußbodengerüst 1 wird auf einen Rahmen, außerhalb des Flugzeugs vormontiert. Die Montage des Fußbodens mit dem Rumpf findet dann mittels der einstellbaren Stangen 4a,4b statt, die mit Bolzen in den vorbereiteten Aufnahmebohrungen im Fußbodenquerträger und im rumpfseitigen Beschlag eingesetzt werden. Die auftretenden Toleranzen werden durch die einstellbaren Stangen ausgeglichen.

Die Länge der Stangen kann gezielt eingestellt werden. Dabei kann die Längenänderung der Stangen z.B. mittels eines Schraubgewindes erfolgen, wobei die mögliche Zu- oder Abnahme der Länge im Bereich von mehreren Millimetern bis zu Zentimetern liegen kann.

Die Stangen können aus einem Faserverbundmaterial bestehen (z.B. CFK).

## Patentansprüche

1. Flugzeug mit Rumpfschale (10) und Fußbodenstruktur (1) aus Querträgern (2) und Fußbodenplatten, wobei zur Verbindung von Rumpfschale (10) und Fußbodenstruktur (1) Stangen (4a,4b) vorhanden sind, **dadurch gekennzeichnet, dass** die Verbindung von Rumpfschale (10) und Fußbodenstruktur (1) ausschließlich mittels Stangen (4a,4b,5) realisiert wird.

2. Flugzeug nach Anspruch 1, **dadurch gekennzeichnet, dass** mindestens eine der Stangen (4a,4b) zur Verbindung von Rumpfschale (10) und Fußbodenstruktur (1) längenveränderbar ist.

3. Flugzeug nach Anspruch 2, **dadurch gekennzeichnet, dass** eine erste Gruppe von Stangen (4a,4b) vorhanden ist, welche in der Ebene der Fußbodenstruktur (1) verlaufen, wobei diese Stangen (4a,4b) sämtlich längenveränderlich sind.

4. Flugzeug nach Anspruch 3, **dadurch gekennzeichnet, dass** die Stangen (4a,4b) der ersten Gruppe jeweils mit einem Querträger (2) der Fußbodenstruktur (1) verbunden sind.

5. Flugzeug nach Anspruch 3 oder 4, **dadurch gekennzeichnet, dass** innerhalb der ersten Gruppe Stangen (4a) vorhanden sind, die in Flugzeugquerrichtung verlaufen.

6. Flugzeug nach Anspruch 5, **dadurch gekennzeichnet, dass** an jedem Spant (11) der Rumpfschale (10) eine in Flugzeugquerrichtung verlaufende Stange (4a) der ersten Gruppe angeordnet ist.

7. Flugzeug nach einem der Ansprüche 3 oder 4, **dadurch gekennzeichnet, dass** innerhalb der ersten Gruppe Stangen (4b) vorhanden ist, die in einem spitzen Winkel zur Flugzeugquerrichtung verlaufen.

8. Flugzeug nach Anspruch 7, **dadurch gekennzeichnet, dass** an jedem zweiten Spant (11) der Rumpfschale (10) eine in spitzem Winkel zur Flugzeugquerrichtung verlaufende Stange (4b) der ersten Gruppe angeordnet ist.

9. Flugzeug nach einem der vorangehenden Ansprüche, **dadurch gekennzeichnet, dass** die Stangen (4a,4b) wiederlösbar ausgebildet sind.

10. Flugzeug nach einem der vorangehenden Ansprüche, **dadurch gekennzeichnet, dass** eine zweite Gruppe von Stangen (5) vorhanden ist, welche unterhalb der Fußbodenstruktur (1) und im rechten Winkel zur Fußbodenstruktur (1) verlaufen.
